# EUROPÄISCHE PATENTSCHRIFT

(11) **EP 2 017 148 B1**
(45) Veröffentlichungstag und Bekanntmachung des Hinweises auf die Patenterteilung: **16.11.2011**
(21) Anmeldenummer: 08011883.9
(22) Anmeldetag: 02.07.2008
(51) Int. Cl.: B60T 7/20, B60T 13/68, B60T 17/22, B60T 17/18

(54) **Parkbremse für ein Anhängerfahrzeug**
Parking brake for a trailer vehicle
Frein de stationnement pour une remorque

(30) Priorität: 19.07.2007 DE 102007033694
(43) Veröffentlichungstag der Anmeldung: 21.01.2009
(73) Patentinhaber: KNORR-BREMSE Systeme für Nutzfahrzeuge GmbH, 80809 München (DE)
(72) Erfinder: Mayr, Mathias, 82110 Germering (DE)
(74) Vertreter: Schönmann, Kurt

(56) Entgegenhaltungen:
- EP-A1- 1 785 325
- EP-A2- 0 268 045
- EP-A2- 1 531 100
- DE-A1- 4 037 462
- DE-A1-102005 043 607

## Beschreibung

Die Erfindung bezieht sich auf eine Parkbremse für ein Anhängerfahrzeug gemäß dem Oberbegriff des Patentanspruches 1 sowie auf ein Verfahren zum Betätigen einer Parkbremse für ein Anhängerfahrzeug gemäß dem Oberbegriff des Patentanspruches 2.

Für die Parkbremse von Anhängerfahrzeugen ist eine Testfunktion bzw. Prüfstellung gesetzlich vorgeschrieben, mit welcher der Fahrer prüfen kann, ob das Anhängerfahrzeug bestehend, aus Zugfahrzeug und Anhänger/Auflieger, alleine nur mit der mechanischen Feststellbremse des Zugfahrzeuges an einem Hang stehen bleibt. Die Feststellbremse ist bei modernen Fahrzeugen als Federspeicherbremse ausgebildet. In EP 1531100 A2 ist eine konventionelle Bremstestanordnung beschrieben.

Beim Stand der Technik wird zunächst die Feststellbremse aktiviert, d.h. der Federspeicher wird entlüftet und gleichzeitig wird die Anhängersteuerleitung mit Druckluft beaufschlagt, womit der Anhänger gebremst wird. Anschließend wird die Bedieneinheit auf "Testfunktion" gesetzt. Damit wird die Anhängersteuerleitung entlüftet und der Anhänger ist ungebremst. Ist die Federspeicherbremse ausreichend, so bleibt das Anhängerfahrzeug stehen. Ist sie nicht ausreichend, so bemerkt dies der Fahrer, weil das Fahrzeug zu Rollen beginnt. Nach dieser Testfunktion schaltet der Fahrer wieder auf "Parkposition", womit die Anhängersteuerleitung wieder belüftet und der Anhänger wieder neu gebremst wird.

Dies bedeutet einen unnötig hohen Luft- und damit Energieverbrauch. Auch ist vielen Fahrern die "Testfunktion" nicht bekannt, so daß sie das Bedienorgan nur auf "Parkposition" stellen und die Testfunktion überspringen.

Aufgabe der Erfindung ist es, Parkbremse und Verfahren der eingangs genannten Art dahingehend zu verbessern, daß der Energie- und Luftverbrauch verringert und gleichzeitig die Testfunktion mit Sicherheit durchgeführt wird.

Diese Aufgabe wird durch die im Patentanspruch 1 bzw. dem Patentanspruch 2 angegebenen Merkmale gelöst.

Das Grundprinzip der Erfindung liegt darin, beim Betätigen des Bedienorgans für die Parkbremsstellung zuerst nur die Federspeicherbremse zu aktivieren und anschließend zeitverzögert den Anhänger zu bremsen. Ist die Bremskraft der Federspeicherbremse nicht ausreichend, das Anhängerfahrzeug zu halten, so rollt das Fahrzeug in der Zwischenzeit vor dem zeitverzögerten Aktivieren der Anhängerbremse fort und der Fahrer merkt diesen Zustand. Somit wird die Testfunktion automatisch ohne unmittelbares Zutun des Fahrers durchgeführt und gleichzeitig wird der Luft- und damit Energieverbrauch gesenkt.

Im folgenden wird die Erfindung anhand eines Ausführungsbeispieles im Zusammenhang mit den Zeichnungen ausführlicher erläutert. Es zeigt:

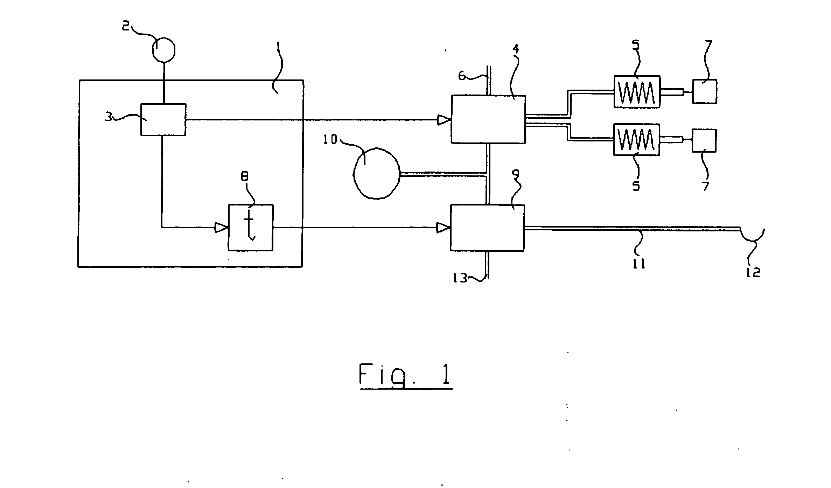

- Fig. 1: ein Prinzipschaltbild einer Parkbremse nach der Erfindung.

Die Parkbremse der Fig. 1 hat eine elektronische Steuerung 1, mit einem Bedienorgan 2, das beispielsweise ein Bedienhebel, ein Taster oder ein Schalter sein kann. Wird das Bedienorgan 2 auf "Parkposition" gebracht, wird durch einen Schalter 3 ein Parkbremsventil 4 auf "Entlüften" umgeschaltet, wodurch ein oder mehrere Federspeicher 5 über eine Entlüftungsöffnung 6 des Parkbremsventiles 4 entlüftet und damit aktiviert werden, d.h. die Feder des Federspeichers 5 betätigt im Regelfall einen Bremszylinder 7 des Zugfahrzeuges.

Damit wird die Parkbremse des Zugfahrzeuges eingelegt.

Gleichzeitig mit der Betätigung des Bedienorgans 2 und dem Schließen des Schalters 3 wird ein Zeitglied 8 in der elektronischen Steuerung 1 gestartet, das nach Ablauf einer vorgegebenen Zeitdauer ein Anhängerbremsventil 9 umschaltet, so daß Druckluft aus einer Druckluftquelle 10 über das Anhängerbremsventil 9 zu einer Anhängersteuerleitung 11 geleitet wird und dort über eine Kupplung 12 die Bremsen des Anhängers betätigt.

In der durch das Zeitglied 8 festgelegten Zeitdauer nach dem Betätigen des Bedienorgans 2, die eine Verzögerungszeit für das zeitliche Nachfolgen der Bremse des Anhängers gegenüber der Bremse des Zugfahrzeuges bestimmt, ist somit nur die Federspeicherbremse 5, 7 des Zugfahrzeuges angelegt, während der Anhänger ungebremst ist. Diese Zeitdauer ist für die geforderte "Testfunktion" benötigte Zeitdauer, in welcher der Fahrer feststellen kann, ob das aus Zugfahrzeug und Anhänger bestehende Anhängerfahrzeug allein durch die Federspeicherbremse des Zugfahrzeuges in Parkposition gehalten wird oder anfängt wegzurollen.

Die "Testfunktion" wird somit automatisch ausgeführt. Dadurch muß der Fahrer nicht mehr durch aktives Zutun die Testfunktion auslösen, was ein Sicherheitsgewinn ist. Zusätzlich wird auch der Luftverbrauch verringert, da - wie eingangs geschildert - beim Stand der Technik beim Aktivieren der Parkstellung zunächst sofort die Anhängersteuerleitung mit Druckluft beaufschlagt wird, während der Testfunktion wieder entlüftet und für die endgültige Parkposition wieder belüftet wird.

Das Lösen der Parkbremse erfolgt in an sich bekannter Weise dadurch, daß das Parkbremsventil 4 in eine Lösestellung gebracht wird, in welcher die Druckluftquelle 10 mit dem Federspeicher 5 verbunden wird, wodurch die Feder gespannt und die Bremszylinder 7 gelöst werden.

Zum Lösen der Bremse des Anhängers wird die Anhängersteuerleitung durch das Anhängerbremsventil 9 zur Atmosphäre hin entlüftet, wozu das Anhängerbremsventil eine Entlüftungsöffnung 13 hat. Die zeitliche Aufeinanderfolge der Lösevorgänge für die Federspeicherbremse und die Anhängerbremse kann verschieden ausgestaltet werden. Möglich ist ein gleichzeitiges Lösen, ein zeitliches Voreilen des Lösens der Anhängerbremse oder auch ein zeitliches Voreilen des Lösens der Federspeicherbremse.

## Patentansprüche

1. Parkbremse für ein Anhängerfahrzeug mit einer elektronischen Steuerung, die ein Betätigungsorgan für die Aktivierung der Parkbremse aufweist, wobei die elektronische Steuerung mit einem Parkbremsventil zur Ansteuerung mindestens einer Federspeicherbremse und mit einem Anhängerbremsventil zur Druckbeaufschlagung einer Anhängersteuerleitung verbunden ist,
**dadurch gekennzeichnet,**
**daß** die elektronische Steuerung (1) ein Zeitglied (8) aufweist, das mit dem Anhängerbremsventil (9) verbunden ist, wobei das Zeitglied (8) eine vorbestimmte Zeitdauer nach Betätigung des Bedienorgans (2) das Anhängerbremsventil (9) zur Druckbeaufschlagung der Anhängersteuerleitung (11) aktiviert.

2. Verfahren zur Betätigung einer Parkbremse eines Anhängerfahrzeuges bestehend aus einem Zugfahrzeug und einem Anhänger, wobei das Verfahren eine Testfunktion enthält, bei der nur eine Federspeicherbremse des Zugfahrzeuges aktiviert und eine Parkbremse des Anhängers deaktiviert ist, während bei aktivierter Parkbremse die Federspeicherbremse des Zugfahrzeuges und die Bremse des Anhängers aktiviert sind, **dadurch gekennzeichnet, daß** beim Aktivieren der Parkbremse
in einem ersten Schritt nur die Federspeicherbremse des Zugfahrzeuges aktiviert wird,
in einem zweiten Schritt nach Ablauf einer vorgegebenen Zeitdauer die Anhängerbremse automatisch zusätzlich aktiviert wird.

## Claims

1. Parking brake for a trailer vehicle comprising an electronic controller including an actuator element for activation of the parking brake, wherein said electronic controller is connected to a parking brake valve for control of at least one spring-loaded brake and a trailer brake valve for pressure application on a trailer control line,
**characterised in**
**that** said electronic controller (1) comprises a timing element (8) that is connected to said trailer brake valve (9), with said timing element (8) activating said trailer brake valve (9) for pressure application on said trailer control line (11) after a predetermined time interval following actuation of said operating element (2).

2. Method of operating a parking brake of a trailer vehicle consisting of a tractor vehicle and a trailer, with the method including a testing function in which only a spring-loaded brake of said tractor vehicle is activated and a parking brake of said trailer is deactivated whereas, when said parking brake is activated, said spring-loaded brake of said tractor vehicle and the brake of said trailer are activated, **characterised in that** when said parking brake is activated, only said spring-loaded brake of said tractor vehicle is activated in a first step while, in a second step, said trailer brake is automatically additionally activated upon expiration of a predetermined time interval.

## Revendications

1. Frein de stationnement pour un véhicule remorque comprenant une unité de commande électronique, qui renferme un élément acteur pour l'activation du frein de stationnement, dans lequel ladite unité de commande électronique est reliée à une soupape de frein de stationnement pour la commande d'au moins un frein à ressort et une soupape de frein de remorque pour l'application d'une pression sur un conduit de commande de remorque,
**Caractérisé en ce**
**que** ladite unité de commande électronique (1) comprend un élément de temporisation (8), qui est relié à ladite soupape de frein de remorque (9), audit élément de temporisation (8) activant ladite soupape de frein de remorque (9) pour l'application de pression sur ledit conduit de commande de remorque (11) après un intervalle de temps prédéterminé, qui suit l'actuation dudit élément acteur (2).

2. Procédé d'actuation d'un frein de stationnement d'un véhicule remorque, qui consiste en un véhicule tracteur et une remorque, ce procédé renfermant une fonction d'essai, dans laquelle un frein à ressort seulement dudit véhicule tracteur est activé et un frein de stationnement de ladite remorque est désactivé, pendant que, quand ledit frein de stationnement est activé, ledit frein à ressort dudit véhicule tracteur et le frein de ladite remorque sont activés, **caractérisé en ce que**, quand ledit frein de stationnement est activé, seulement ledit frein à ressort dudit véhicule tracteur est activé en une première étape, pendant qu'en une deuxième étape, ledit frein de remorque est activé de manière automatique au plus après le déroulement d'un intervalle de temps prédéterminé
